(19) **Europäisches Patentamt**
**European Patent Office**
**Office européen des brevets**

(11) **EP 2 701 896 B1**

(12) **FASCICULE DE BREVET EUROPEEN**

(45) Date de publication et mention
de la délivrance du brevet:
**08.04.2015 Bulletin 2015/15**

(51) Int Cl.:
***B29D 30/66*** (2006.01)   ***B29D 30/06*** (2006.01)
***B60C 1/00*** (2006.01)   ***B60C 11/11*** (2006.01)
***B60C 11/12*** (2006.01)   ***B60C 11/13*** (2006.01)
***B60C 11/14*** (2006.01)

(21) Numéro de dépôt: **12725063.7**

(22) Date de dépôt: **27.04.2012**

(86) Numéro de dépôt international:
**PCT/FR2012/050940**

(87) Numéro de publication internationale:
**WO 2012/146878 (01.11.2012 Gazette 2012/44)**

(54) **PROCEDE DE FABRICATION D'UN PNEUMATIQUE COMPRENANT UNE BANDE DE ROULEMENT PERFECTIONNEE AVEC UN MATERIAU ALVEOLAIRE ET PNEUMATIQUE OBTENU PAR CE PROCÉDÉ**

VERFAHREN ZUR HERSTELLUNG EINES REIFENS MIT VERBESSERTER LAUFFLÄCHE MIT EINEM SCHAUMSTOFFMATERIAL UND DAMIT HERGESTELLTER REIFEN

METHOD FOR PRODUCING A TYRE COMPRISING AN IMPROVED TREAD WITH A FOAMED MATERIAL AND TYRE OBTAINED THEREBY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2011 FR 1153618**

(43) Date de publication de la demande:
**05.03.2014 Bulletin 2014/10**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **MERINO LOPEZ, José**
**F-63040 Clermont-Ferrand Cedex 9 (FR)**
• **VASSEUR, Didier**
**F-63040 Clermont-Ferrand Cedex 9 (FR)**
• **CUSCITO, Olivia**
**F-63040 Clermont-Ferrand Cedex 9 (FR)**
• **PETITJEAN, Sylvain**
**F-63040 Clermont-Ferrand Cedex 9 (FR)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
**EP-A2- 0 540 339    EP-A2- 0 540 340**
**JP-A- 11 058 384**

**Description**

La présente invention concerne le domaine des pneumatiques comprenant un matériau alvéolaire.

Pour améliorer l'adhérence d'un pneumatique, le document WO2009/003576 ou WO2009/003577 propose un pneumatique comprenant une bande de roulement comportant

- une couche de gomme externe, appelée par la suite couche de roulage, en matériau alvéolaire, dans laquelle sont ménagés des éléments de sculpture creux, et
- une couche de gomme interne ayant une dureté supérieure à celle de la couche externe.

Pour fabriquer un tel pneumatique, on réalise une ébauche crue comprenant une masse de gomme, destinée à former la couche de roulage, dans laquelle est incorporé un agent porogène. Puis, on place l'ébauche dans un moule de vulcanisation et on chauffe l'ébauche sous pression dans ce moule.

Sous l'effet de la chaleur et de la pression, une réaction chimique impliquant l'agent porogène crée des bulles de gaz formant des alvéoles dans le matériau qui devient donc alvéolaire. Le contour externe de la couche de roulage est imposé par le moule. Une fois la cuisson achevée, on extrait le pneumatique du moule.

Pour que les performances d'adhérence soient intéressantes, on souhaite que le taux d'expansion du matériau alvéolaire soit supérieur ou égal à 50 % ce qui impose un taux minimum d'agent porogène dans la masse de gomme destinée à former la couche de roulage.

Avec un tel taux d'expansion, après extraction du pneumatique du moule, on observe que la forme de la couche de roulage continue à évoluer, de façon que cette couche s'expanse radialement au-delà du contour externe souhaité. Cette expansion est le résultat des deux effets suivants.

D'une part, en sortie de moule, le volume des alvéoles contenant le gaz continue d'augmenter en faisant gonfler la couche de roulage au delà du contour imposé par le moule.

D'autre part, à cause de la différence de pression entre le moment où le pneumatique est dans le moule et le moment où le pneumatique est sorti du moule, on observe une expansion de la couche de roulage en sortie de moule.

Ces deux effets ne permettent pas d'obtenir en sortie de moule une géométrie précise de la couche de roulage et donc ne permettent pas d'obtenir les performances souhaitées du pneumatique.

En outre, les gaz dissous dans le matériau alvéolaire ont tendance à s'accumuler au sein de bulles de tailles relativement importantes. Ces bulles d'accumulation forment des alvéoles de grandes tailles qui fragilisent la couche de roulage et détériorent les performances du pneumatique.

La demande EP 0 540 340 A2 décrit un procédé de fabrication d'un pneumatique comprenant une couche de matériau alvéolaire formant une couche de roulage.

L'invention a notamment pour but d'optimiser la géométrie et la résistance de la couche de roulage en matériau alvéolaire d'un pneumatique.

A cet effet, l'invention a pour objet un procédé de fabrication d'un pneumatique dans lequel on vulcanise une ébauche crue du pneumatique dans un moule, ce pneumatique comprenant une couche de matériau alvéolaire formant une couche de roulage d'une bande de roulement du pneumatique dans laquelle sont ménagés des éléments de sculpture creux,
la couche de roulage ayant

- une épaisseur E, et
- un taux d'expansion supérieur ou égal à 50%, dans lequel procédé
- on munit l'ébauche crue d'une masse de matériau, comportant du p,p'-oxybis (benzene sulfonyl) hydrazide formant agent porogène, ce matériau comportant l'agent porogène étant destiné à former le matériau alvéolaire, le procédé étant caractérisé en ce que:
- on place l'ébauche crue dans un moule de vulcanisation comprenant des éléments de moulage des éléments de sculpture creux,
le moule étant tel qu'au moins 95% des éléments de moulage vérifient chacun les deux conditions a) et b) suivantes :

a) l'élément de moulage est séparé d'au moins un autre élément de moulage d'une distance, exprimée en millimètres, inférieure ou égale à

$$DM = 6.85 + 0,0065\ T^3,$$

T étant le taux de p,p'-oxybis (benzene sulfonyl) hydrazide dans la masse de matériau destinée à former le matériau alvéolaire, et T étant supérieur ou égal à 3 pce,
la distance de séparation de deux éléments de moulage étant la distance la plus courte entre ces deux éléments de moulage parcourue entre ces éléments de moulage,
b) l'élément de moulage est destiné à former un élément de sculpture creux ayant une profondeur au moins égale à 80 % de l'épaisseur E de la couche de roulage.

Le taux T de p,p'-oxybis (benzene sulfonyl) hydrazide supérieur ou égal à 3 pce permet une expansion relativement immédiate et une cuisson accélérée du matériau alvéolaire.

Les conditions a) et b) imposent une densité relativement importante d'éléments de sculpture profonds dans la couche de roulage du pneumatique obtenu par le procédé selon l'invention.

Ainsi, grâce à l'invention, bien que le taux d'expansion du matériau alvéolaire soit supérieur ou égal à 50%, la densité des éléments de sculpture creux dans la couche de roulage est telle que ces derniers permettent de limiter, voire de supprimer, les variations géométriques de la couche de roulage lorsque le pneumatique est sorti du moule de vulcanisation. En effet, en sortie de moule, le matériau alvéolaire s'expanse essentiellement dans les éléments de sculpture creux qui sont relativement nombreux (sans pour autant combler ces éléments de sculpture), plutôt qu'au-delà du contour externe souhaité. Enfin, les éléments de sculpture suffisamment nombreux et profonds permettent, en cours de vulcanisation, d'évacuer les éventuels excès de gaz et donc d'éviter la formation de cavités de trop grandes tailles.

Ainsi, le pneumatique obtenu par le procédé selon l'invention présente une couche de roulage résistante dont la géométrie est maîtrisée.

Par ailleurs, il a été constaté, de façon surprenante, que plus le taux de p,p'-oxybis (benzene sulfonyl) hydrazide est grand, moins la couche de roulage s'expanse en sortie de moule si bien que la densité d'éléments de sculpture creux requise peut être diminuée lorsque le taux de cet agent porogène augmente. La condition a) est donc de moins en moins contraignante plus le taux de p,p'-oxybis (benzene sulfonyl) hydrazide est grand.

Suivant d'autres caractéristiques optionnelles du procédé selon l'invention :

- $DM = 5.9 + 0{,}005T^3$ ;
- les éléments de moulage vérifiant les conditions a) et b) vérifient également la condition suivante : l'élément de moulage est destiné à former un élément de sculpture creux choisi parmi

  - des canaux d'évacuation d'eau délimitant, dans la couche de roulage, des blocs de matériau alvéolaire, et
  - des trous borgnes ménagés dans ces blocs de façon à déboucher radialement.

L'invention a également pour objet un pneumatique fabriqué en mettant en oeuvre le procédé tel que défini ci-dessus.

L'invention sera mieux comprise à la lecture de la description qui va suivre donnée uniquement à titre d'exemple et faite en se référant aux dessins dans lesquels :

- la figure 1 est une vue en perspective avec des coupes suivant des plans axial et radial d'une partie d'un pneumatique fabriqué selon un procédé selon un premier mode de réalisation de l'invention ;
- la figure 2 est une vue en coupe suivant le plan II-II de la figure 1 ;

- la figure 3 est une vue en perspective d'une partie d'un moule de vulcanisation permettant de fabriquer le pneumatique représente sur les figures 1 et 2 ;
- la figure 4 est une vue en coupe axiale du pneumatique représenté sur les figures 1 et 2 après avoir été extrait du moule et après expansion éventuelle du matériau alvéolaire ;
- la figures 5 est une vue analogue à celle de la figure 1 d'une partie d'un pneumatique fabriqué selon un procédé selon un deuxième mode de réalisation de l'invention ;
- la figure 6 est une vue en perspective d'une partie d'un moule de vulcanisation permettant de fabriquer le pneumatique représenté sur la figure 5.

Sur certaines des figures représentant un pneumatique, on a indiqué un repère comportant des axes X, Y, Z orthogonaux entre eux correspondant aux orientations habituelles radiale X, axiale Y et circonférentielle Z du pneumatique.

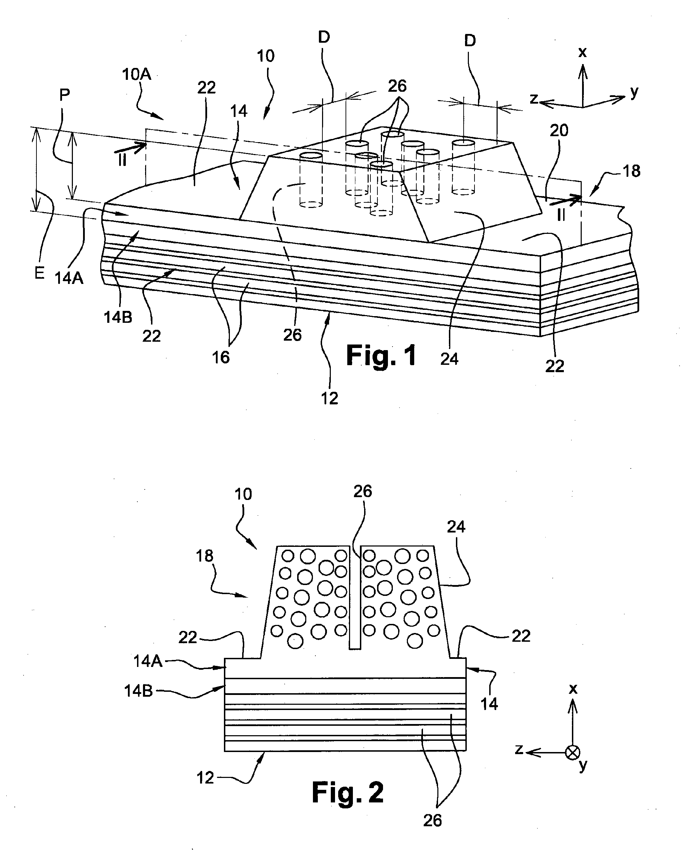

On a représenté sur les figures 1 et 2 une partie d'un pneumatique 10 fabriqué selon un procédé selon un premier mode de réalisation de l'invention. Sur ces figures, le pneumatique 10 présente un contour externe souhaité après sa sortie d'un moule de vulcanisation.

Le pneumatique 10 comprend une couche d'armature 12 recouverte par une bande de roulement 14.

La couche d'armature 12, connue en soi, comporte des renforts métalliques ou textiles 16 noyés dans une gomme classique.

La bande de roulement 14 comporte une couche de gomme externe, appelée couche de roulage 14A, en matériau alvéolaire dans laquelle sont ménagés des éléments de structure creux 18, et une couche de gomme interne 14B ayant une dureté supérieure à celle de la couche externe. La couche interne 14B est donc intercalée radialement entre la couche de roulage 14A et la couche d'armature 12.

La couche de roulage 14A a une épaisseur E. Le matériau de la couche de roulage 14A a un taux d'expansion supérieur ou égal à 50%. Ce taux d'expansion peut être mesuré à l'aide d'un procédé et de moyens connus en soi.

Les éléments de sculpture creux 18 forment des éléments choisis parmi des canaux 20, 22 d'évacuation d'eau délimitant, dans la couche de roulage 14A des blocs 24 ou pains de matériaux alvéolaires, et des trous borgnes 26, ménagés dans ces blocs 24 de façon à déboucher radialement.

Les canaux d'évacuation d'eau 20,22 forment par exemple des sillons circonférentiels ou des canaux sensiblement transversaux.

Dans le pneumatique 10 fabriqué selon le procédé selon le premier mode de réalisation de l'invention, les trous borgnes 26 ont une forme générale cylindrique.

Au moins 95% des éléments de sculpture 20, 22, 26 vérifient chacun la condition suivante : l'élément de sculpture a une profondeur P au moins égale à 80%

de l'épaisseur E de la couche de roulage 14A.

Les trous borgnes 26 peuvent être répartis de façon régulière dans les blocs 24, par exemple suivant une répartition en quinconce.

On décrira ci-dessous les principales étapes du procédé selon le premier mode de réalisation de l'invention permettant la fabrication du pneumatique 10 illustré sur les figures 1 et 2.

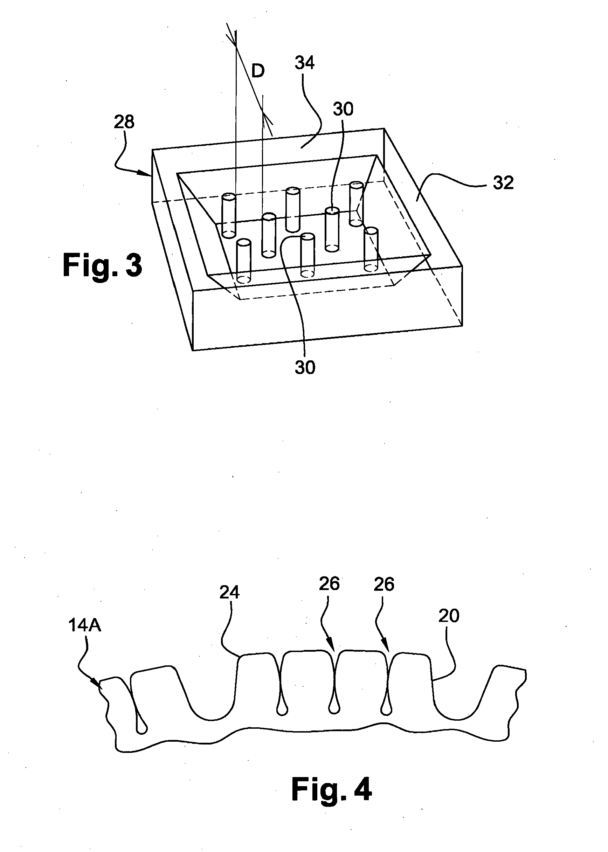

Selon ce procédé, on vulcanise une ébauche crue du pneumatique dans un moule de vulcanisation 28 dont on a représenté une partie sur la figure 3.

Sur cette figure 3, la partie du moule 28 que l'on a représentée est destinée à mouler un bloc 24. A cet effet, elle comprend notamment des éléments de moulage 30 en forme de doigts cylindriques, destinés au moulage des éléments de sculpture creux formés par les trous borgnes 26. La partie du moule 28 comporte également des éléments de moulage 32, 34 destinés à participer au moulage des éléments de sculpture creux formés par les canaux 20, 22 d'évacuation d'eau.

Le moule 28 est tel qu'au moins 95% des éléments de moulage vérifient chacun les deux conditions a) et b) suivantes :

a) l'élément de moulage est séparé d'au moins un autre élément de moulage d'une distance D, exprimée en millimètres, inférieure ou égale à

$$DM = 6.85 + 0{,}0065\ T^3,$$

T étant le taux de p,p'-oxybis (benzene sulfonyl) hydrazide dans la masse de matériau destinée à former le matériau alvéolaire, et T étant supérieur ou égal à 3 pce,

b) l'élément de moulage est destiné à former un élément de sculpture creux ayant une profondeur au moins égale à 80 % de l'épaisseur E de la couche de roulage.

La distance D de séparation de deux éléments de moulage est la distance la plus courte entre ces deux éléments de moulage parcourue entre ces éléments de moulage.

De préférence, $DM = 5.9 + 0{,}005\ T^3$.

On notera que les éléments de moulage 30, 32, 34 vérifiant les conditions a) et b) sont destinés à former un élément de sculpture creux choisi parmi

- les canaux 20, 22 d'évacuation d'eau, et
- les trous borgnes 26 ménagés dans les blocs 24.

Selon le procédé conforme au premier mode réalisation de l'invention, tout d'abord, on munit l'ébauche crue d'une masse de matériau comportant un agent porogène. Cette masse de matériau est destinée à former la couche de roulage 14A en matériau alvéolaire.

L'agent porogène comprend du p,p'-oxybis (benzene sulfonyl) hydrazide.

Puis, on place l'ébauche crue dans le moule 28 de vulcanisation comprenant les éléments de moulage des éléments de sculpture creux.

Après vulcanisation, on sort le pneumatique du moule 28.

Comme cela est représenté sur la figure 4, en sortie de moule, le matériau alvéolaire de la bande de roulage 14A s'expanse essentiellement dans les éléments de sculpture creux, notamment les éléments 20, 26, qui sont relativement nombreux (sans pour autant combler ces éléments de sculpture), plutôt qu'au delà du contour externe souhaité tel que représenté sur les figures 1 et 2.

Toutefois, il a été constaté, de façon surprenante, que plus le taux T de p,p'-oxybis (benzene sulfonyl) hydrazide est grand, moins la couche de roulage 14A s'expanse en sortie de moule.

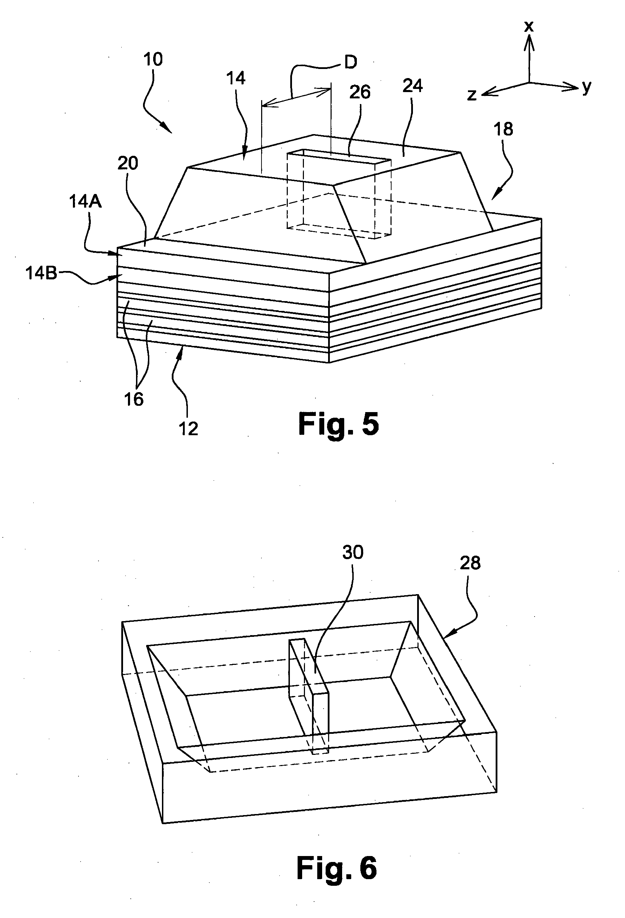

Sur la figure 5, on a représenté une partie de pneumatique 10 fabriqué selon un procédé selon un second mode de réalisation de l'invention. Sur cette figure 5, les éléments analogues à ceux des figures précédentes sont désignés par des références identiques.

Dans ce cas, à la différence du premier mode de réalisation de l'invention, les blocs 24 peuvent comporter au moins un trou borgne 26 en forme générale de fente parallélépipédique débouchant radialement.

Le procédé de fabrication du pneumatique 10 représenté sur les figures 5 et 6, selon le second mode de réalisation de l'invention, est sensiblement similaire à celui selon le premier mode de réalisation de l'invention.

Toutefois, dans le cas du procédé selon le second mode de réalisation de l'invention, la partie de moule de vulcanisation 28 comporte un élément de moulage 30 de forme générale parallélépipédique complémentaire de celle du trou borgne 26.

L'invention ne se limite pas aux modes de réalisation décrits précédemment.

En particulier, on notera que les éléments de sculpture ménagés dans la bande de roulage peuvent avoir des formes variées.

## Revendications

1. Procédé de fabrication d'un pneumatique (10) dans lequel on vulcanise une ébauche crue du pneumatique dans un moule (28),
ce pneumatique (10) comprenant une couche de matériau alvéolaire formant une couche de roulage (14A) d'une bande de roulement (14) du pneumatique dans laquelle sont ménagés des éléments de sculpture creux (20, 22, 26),
la couche de roulage (14A) ayant

- une épaisseur E, et
- un taux d'expansion supérieur ou égal à 50%,

dans lequel procédé

- on munit l'ébauche crue d'une masse de matériau, comportant du p,p'-oxybis (benzene sulfonyl) hydrazide formant agent porogène, ce matériau comportant l'agent porogène étant destiné à former le matériau alvéolaire,

le procédé étant **caractérisé en ce que**

- on place l'ébauche crue dans un moule de vulcanisation (28) comprenant des éléments de moulage (30, 32, 34) des éléments de sculpture creux (20, 22, 26), le moule (28) étant tel qu'au moins 95% des éléments de moulage (30, 32, 34) vérifient chacun les deux conditions a) et b) suivantes :

a) l'élément de moulage (30, 32, 34) est séparé d'au moins un autre élément de moulage (30, 32, 34) d'une distance, exprimée en millimètres, inférieure ou égale à

$$DM = 6.85 + 0{,}0065\ T^3,$$

T étant le taux de p,p'-oxybis (benzene sulfonyl) hydrazide dans la masse de matériau destinée à former le matériau alvéolaire, et T étant supérieur ou égal à 3 pce, la distance de séparation de deux éléments de moulage (30, 32, 34) étant la distance la plus courte entre ces deux éléments de moulage (30, 32, 34) parcourue entre ces éléments de moulage (30, 32, 34),

b) l'élément de moulage (30, 32, 34) est destiné à former un élément de sculpture creux (20, 22, 26) ayant une profondeur au moins égale à 80 % de l'épaisseur E de la couche de roulage (14A).

2. Procédé selon la revendication 1, dans lequel DM = 5.9 + 0,005 $T^3$.

3. Procédé selon la revendication 1 ou 2, dans lequel les éléments de moulage (30, 32, 34) vérifiant les conditions a) et b) vérifient également la condition suivante : l'élément de moulage est destiné à former un élément de sculpture creux choisi parmi

- des canaux d'évacuation d'eau (20, 22) délimitant, dans la couche de roulage (14A), des blocs (24) de matériau alvéolaire, et
- des trous borgnes (30) ménagés dans ces blocs de façon à déboucher radialement.

4. Pneumatique fabriqué en mettant en oeuvre le procédé selon l'une quelconque des revendications précédentes.

**Patentansprüche**

1. Verfahren zur Herstellung eines Reifens (10), wobei ein Rohling des Reifens in einer Form (28) vulkanisiert wird,

wobei dieser Reifen (10) eine Schaumstoffschicht aufweist, die eine Laufschicht (14A) eines Laufstreifens (14) des Reifens bildet, in welcher hohle Profilelemente (20, 22, 26) ausgebildet sind,

wobei die Laufschicht (14A) aufweist

- eine Dicke E, und
- ein Expansionsverhältnis, das größer oder gleich 50 % ist,

wobei bei diesem Verfahren

- der Rohling mit einer Materialmasse versehen wird, welche p,p'-Oxybis(benzolsulfonyl)hydrazid aufweist, das einen Porenbildner bildet, wobei dieses den Porenbildner aufweisende Material dazu bestimmt ist, den Schaumstoff zu bilden,

wobei das Verfahren **dadurch gekennzeichnet** ist, dass

- der Rohling in einer Vulkanisierform (28) angeordnet wird, die Formelemente (30, 32, 34) zum Formen der hohlen Profilelemente (20, 22, 26) aufweist,

wobei die Form (28) so beschaffen ist, dass mindestens 95 % der Formelemente (30, 32, 34) jede der folgenden zwei Bedingungen a) und b) erfüllen:

a) Das Formelement (30, 32, 34) ist von mindestens einem anderen Formelement (30, 32, 34) durch einen Abstand getrennt, der, in Millimetern ausgedrückt, kleiner oder gleich

$$DM = 6{,}85 + 0{,}0065\ T^3$$

ist, wobei T der Anteil von p,p'-Oxybis(benzolsulfonyl)hydrazid in der Materialmasse ist, die dazu bestimmt ist, den Schaumstoff zu bilden, und T größer oder gleich 3 pce ist, wobei der Trennabstand von zwei Formelementen (30, 32, 34) der kürzeste Abstand zwischen diesen beiden Formelementen (30, 32, 34) ist, der zwischen diesen Formelementen (30, 32, 34) zurückzulegen ist;

b) das Formelement (30, 32, 34) ist dazu bestimmt, ein hohles Profilelement (20, 22, 26) mit einer Tiefe zu formen, die mindestens gleich 80 % der Dicke E der Laufschicht (14A) ist.

**2.** Verfahren nach Anspruch 1, wobei DM = 5, 9 + 0,005 T$^3$ ist.

**3.** Verfahren nach Anspruch 1 oder 2, wobei die Formelemente (30, 32, 34), welche die Bedingungen a) und b) erfüllen, auch die folgende Bedingung erfüllen: Das Formelement ist dazu bestimmt, ein hohles Profilelement zu formen, das ausgewählt ist aus

- Wasserablaufrillen (20, 22), welche in der Laufschicht (14A) Blöcke (24) aus Schaumstoff begrenzen, und
- Sacklöchern (30), die in diesen Blöcken derart ausgebildet sind, dass sie radial münden.

**4.** Reifen, der unter Anwendung des Verfahrens nach einem der vorhergehenden Ansprüche hergestellt wird.

**Claims**

**1.** Process for manufacturing a tyre (10) in which an uncured blank of the tyre is vulcanized in a mould (28),
this tyre (10) comprising a layer of cellular material that forms a running layer (14A) of a tread (14) of the tyre in which hollow tread pattern elements (20, 22, 26) are made,
the running layer (14A) having

- a thickness E, and
- a degree of expansion of greater than or equal to 50%,

in which process

- the uncured blank is provided with a mass of material, comprising p,p'-oxybis(benzenesulphonyl hydrazide) that forms a pore-forming agent, this material comprising the pore-forming agent being intended to form the cellular material,

the process being **characterized in that**

- the uncured blank is placed in a vulcanization mould (28) comprising moulding elements (30, 32, 34) for moulding the hollow tread pattern elements (20, 22, 26),

the mould (28) being such that at least 95% of the moulding elements (30, 32, 34) each satisfy the following two conditions a) and b):

a) the moulding element (30, 32, 34) is separated from at least one other moulding element (30, 32, 34) by a distance, expressed in millimetres, of less than or equal to

$$DM = 6.85 + 0.0065 \ T^3,$$

T being the amount of p,p'-oxybis(benzenesulphonyl hydrazide) in the mass of material intended to form the cellular material, and T being greater than or equal to 3 phr,
the separation distance between two moulding elements (30, 32, 34) being the shortest distance between these two moulding elements (30, 32, 34) travelled between these moulding elements (30, 32, 34),
b) the moulding element (30, 32, 34) is intended to form a hollow tread pattern element (20, 22, 26) having a depth at least equal to 80% of the thickness E of the running layer (14A).

**2.** Process according to Claim 1, in which DM = 5.9 + 0.005 T$^3$.

**3.** Process according to Claim 1 or 2, in which the moulding elements (30, 32, 34) that satisfy the conditions a) and b) also satisfy the following condition: the moulding element is intended to form a hollow tread pattern element chosen from

- water evacuation channels (20, 22) that delimit, in the running layer (14A), blocks (24) of cellular material, and
- blind holes (30) made in these blocks so as to open radially.

**4.** Tyre manufactured by implementing the process according to any one of the preceding claims.

**Fig. 1**

**Fig. 2**

**Fig. 3**

**Fig. 4**

Fig. 5

Fig. 6

## RÉFÉRENCES CITÉES DANS LA DESCRIPTION

**Documents brevets cités dans la description**

- WO 2009003576 A
- WO 2009003577 A
- EP 0540340 A2